# EUROPEAN PATENT APPLICATION

(11) **EP 1 873 707 A1**
(43) Date of publication of application: **02.01.2008**
(21) Application number: 07101930.1
(22) Date of filing: 07.02.2007
(51) Int. Cl.: G06Q 30/00, B62B 3/14

(54) **Information apparatus**

(30) Priority: 29.06.2006 GB 0612881
(71) Applicant: Gough, Oliver Justin, Sleaford Lincolnshire NG34 9AL (GB); Andrew, David, Swinehead, Boston Fenhouses Lincolnshire PE20 3HS (GB)
(72) Inventor: Cough, Olivier Justin, NG34 9AL Lincolnshire Sleaford (GB)
(74) Representative: Gill, David Alan

(57) **Abstract**

The present invention provides for an information apparatus for a trolley, comprising: display means for displaying information to a user; control means; a power source; and a user interface for allowing a user to input data, wherein said information apparatus is arranged for location within a handle of said trolley.

## Description

The present invention relates to an information apparatus and, in particular, an information apparatus for a trolley for providing information to a customer in a retail environment.

Shopping trolleys are well known as being useful for moving large amounts of shopping around, and from, a large store such as a supermarket. Similarly, luggage trolleys in bus/train stations or airport terminals are well known for their use in moving luggage around a bus/train station or airport terminal.

Such retail and transport facilities commonly comprise large areas in which it can be difficult for a consumer to locate a desired product. The same applies in stations or airports where it is often difficult for a traveller to locate a particular platform, gate, information desk, etc.

In addition to the above drawbacks, shopping/luggage trolleys represent an expensive overhead for the facility and costs can also arise in the maintenance of these trolleys. Further expenses can arise because such trolleys need to be replaced when damaged or lost, personnel need to be employed to locate and collect trolleys and return the trolleys to a storage location, and also to catalogue damaged trolleys. Also, inappropriately discarded trolleys can result in the proprietor being fined.

EP 0133235, FR 2719931, DE 3932550, DE 10300339 and DE 10121838 each disclose similar user guidance systems for displaying information to a trolley user by means of a display attached to the trolley. These user guidance systems can display the location of a user and the location of a desired product/platform/gate, etc. The systems comprise a transceiver mounted on the trolley which is arranged to communicate with a central processing station.

However, in these known systems, the location of the display (i.e. mounted upon, or above, the handle of the trolley) prevents a child from sitting in a child seat of the trolley. Further, the location of the displays leaves them open to damage/vandalism and the bulky nature of the displays can result in an unwieldy trolley with awkward handling.

The present invention seeks to provide for apparatus for a trolley having advantages over known such trolleys.

According to one aspect of the present invention, there is provided an information apparatus for a trolley, comprising: display means for displaying information to a user; control means; a power source; a user interface for allowing a user to input data; and a receiver for receiving data wirelessly over a communication network from a central server, wherein said information apparatus is arranged for location within a handle of said trolley.

The location of the apparatus within the handle is advantageous in that a bulky display means mounted upon the handle is no longer required, thus rendering the trolley as manoeuvrable as a standard trolley, and allowing a child to use the child seat. By locating the display within the handle, the likelihood of damage to the display can be avoided as it is protected by the material of the handle. The apparatus is also advantageous in that each trolley location can be monitored thereby making the retrieval of discarded trolleys easier. Also, by displaying advertisements on the display means, the costs involved in maintaining trolleys, etc. can be recouped by the sale of the advertising space.

Further, said display means is arranged to display information based upon data received via said receiver from said central server.

Also, said data received via said receiver from said central server is displayed on said display means when a trolley in which the apparatus is located is at particular locations in an environment where the trolley operates.

Preferably, said user interface comprises a keypad allowing input of data by a user.

Conveniently, said power source comprises a rechargeable cell.

Advantageously, the apparatus further comprises a solar cell coupled to said rechargeable cell and arranged to recharge said rechargeable cell.

Further, said solar cell is arranged for location within said handle of said trolley.

Also, said apparatus further comprises a dynamo coupled to said rechargeable cell and arranged to recharge said rechargeable cell.

Preferably, said display means comprises an organic light emitting diode display.

Conveniently, said apparatus further comprises at least one speaker for communicating audio data to a user.

Advantageously, said apparatus further comprises an audio gain means for allowing a user to alter an amplitude of audio data communicated by said at least one speaker.

The apparatus further comprising a vibrating means arranged to cause a handle of said trolley to vibrate.

Also, said control means comprises a processing means and a memory.

Preferably, said memory is arranged to store data relating to a particular trolley in which said apparatus is located.

Conveniently, said memory is arranged to store data relating to an environment in which a trolley in which the apparatus is located operates.

Advantageously, said apparatus further comprises a transmitter for transmitting data wirelessly over a communication network to a central server.

Preferably, said display means is arranged to display information based upon data received via said receiver from said central server in response to data input by a user via said user interface.

Conveniently, said user interface further comprises a scanning means operable to receive printed matter input by said user and to convert information contained on said printed matter to electronic data.

Advantageously, said electronic data is arranged for storage in said memory.

Further, said apparatus is arranged to enter a standby mode during periods of inactivity, and to exit said standby mode when a user places their hands on a handle in which said apparatus is located and/or when a trolley in which the apparatus is located moves.

Also, said control means can further comprise a GPS system operable to transmit location data to said central server to enable an operator to monitor the location of a particular trolley in which the apparatus is located.

Preferably, said apparatus is arranged to perform at least one of the following when a trolley in which the apparatus is located passes a boundary of an environment in which the trolley normally operates: (a) display a warning on said display means; (b) output an audible warning from said at least one speaker; and (c) cause a handle within which the apparatus is located to vibrate.

Such a configuration is also advantageous in that the system can be installed on existing trolleys merely by the replacement of their existing handles. Thus, according to another aspect of the present invention, there is provided a handle for a trolley comprising the apparatus as described above.

According to a further aspect of the present invention, there is provided a trolley comprising a handle provided with the apparatus as described above.

According to yet another aspect of the present invention, there is provided an information system, comprising: a trolley as described above; a control centre comprising a central server; and a wireless communications network.

Preferably, said wireless communications network includes a satellite link.

According to a further aspect of the present invention, there is provided a scanning device comprising display means, a transceiver, and a control means, wherein said scanning device is operable in conjunction with the information system described above in order to locate trolleys inside and/or outside a perimeter boundary of an environment in which the trolley normally operates, and to display the location of such trolleys on said display means.

The present invention is described further hereinafter, by way of example only, with reference to the accompanying drawings in which:
Fig. 1 illustrates a shopping trolley incorporating an apparatus of the present invention;
Fig. 2a illustrates a side view of the apparatus of Fig. 1;
Fig. 2b illustrates a cross-sectional side view of the apparatus of Fig. 2a viewed along the line X-X;
Fig. 3 illustrates a schematic block diagram of a control unit of the apparatus of the present invention;
Fig. 4 illustrates a partial schematic block diagram of the apparatus of the present invention in a communications network; and
Fig. 5 illustrates a perspective view of a device for locating shopping trolleys having the apparatus of the present invention applied thereto.

Whilst in the described embodiments below, the apparatus is described in relation to a shopping trolley; the apparatus may be easily adapted to any type of trolley including, for example, baggage trolleys at railway/bus stations and in airports.

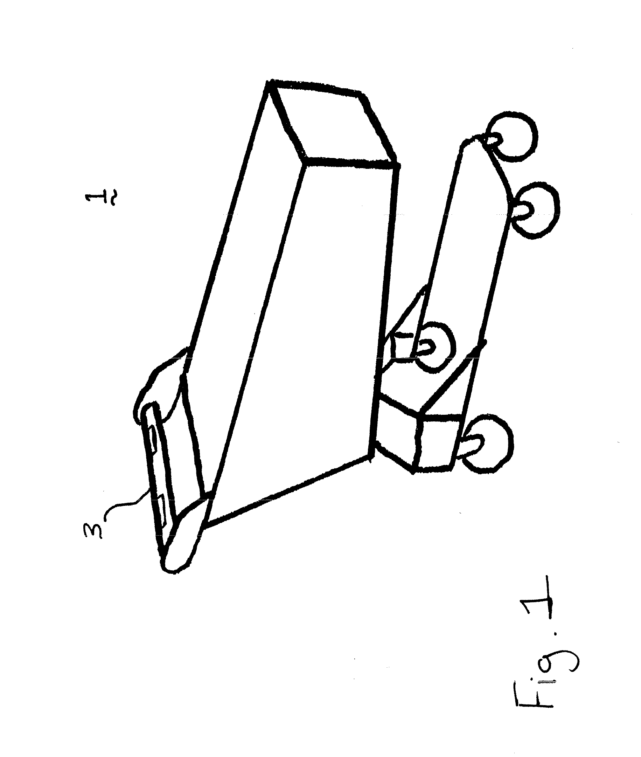

As mentioned, Fig. 1 illustrates a shopping trolley 1 provided with an apparatus according to the present invention. The shopping trolley 1 is a conventional shopping trolley which comprises well known features which require no further description.

The apparatus of the present invention is incorporated into the handle portion 3 of the shopping trolley 1.

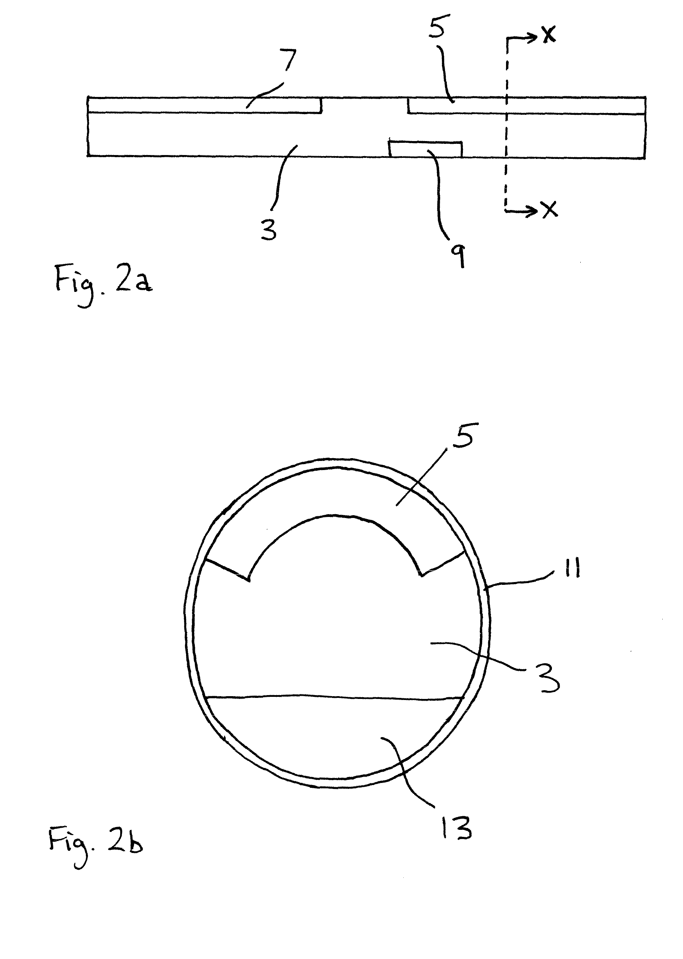

Fig. 2a illustrates the handle portion 3 in more detail, and it can be seen that the handle has provided thereon a display 5, a solar cell 7 and a user interface 9.

The handle portion 3 comprises a tube constructed from a resilient material (e.g. polycarbonate) arranged to encase the display 5 and the solar cell 7. The material from which the handle portion 3 is formed is transparent to enable a user to view the display 5 and to enable light to reach the solar cell 7 or, alternatively, the handle portion 3 may comprise transparent portions adjacent said display 5 and said solar cell 7.

Encasing the display 5 and the solar cell 7 within the housing in this manner affords protection to these devices and reduces the risk of damage to the devices.

In the present embodiment, the display 5 comprises an organic light emitting diode (OLED) digital screen. An OLED screen uses carbon-based molecules which are smaller than those in a standard LED display, and thereby provides a smaller sized display than a standard LED display. A smaller, thinner and lighter display is preferred due to the location of the display 5 within the handle portion 3 of the trolley 1. Of course, standard LED screens or LCD (liquid crystal display) screens could be used in place of the OLED digital screen if there is not a limitation on the scale of the screen.

The solar cell 7 is arranged to provide power to a rechargeable power source (not shown) and, preferably, has the ability to provide power to said rechargeable power source even under artificial light sources. In order to absorb the maximum amount of incident light radiation, the solar cell 7 should be located in the handle portion 3 with a substantially upward-facing aspect.

User interface 9 comprises a means, preferably a keypad, to allow a user to input information into said system, e.g. a user may wish to enter a shopping list into the system. In such a case, the system is arranged to display the location of each item from the shopping list, and may also display a store map to assist the user in navigating their way around the store to obtain the desired items.

Fig. 2b illustrates a cross-sectional side view of handle portion 3 as viewed along the section X-X of Fig. 2a. As can be seen from the figure, tube 11 forming the handle portion 3 houses the display 5 and a control unit 13. The control unit 13 is arranged to control operation of the apparatus of the present invention.

The tube 11 also houses a rechargeable power source (not shown) which is preferably a Nickel-Hydrogen (Ni-H) battery, and which is arranged to be recharged by means of said solar cell 7.

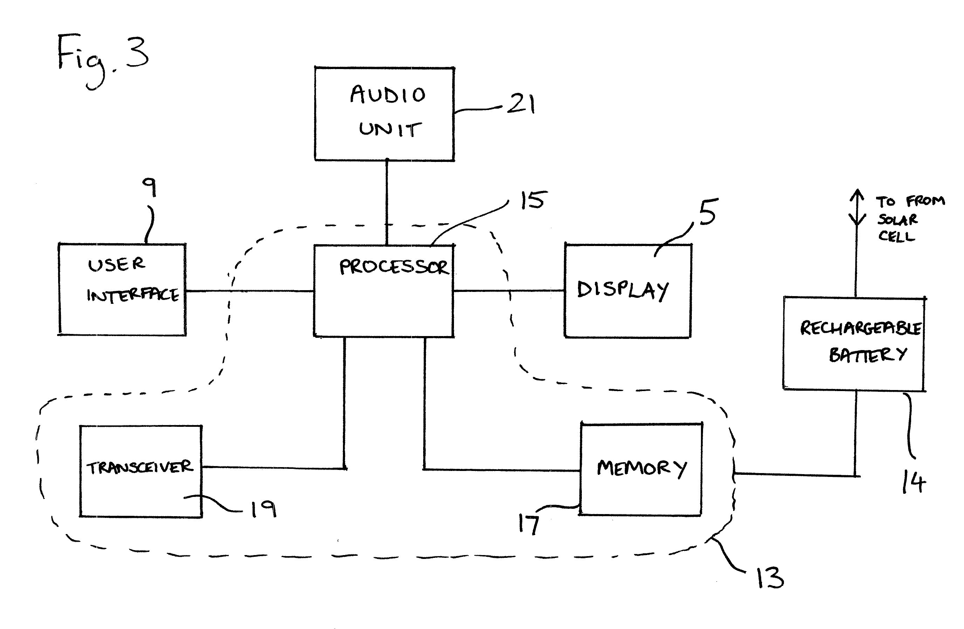

In Fig. 3 there is shown the control unit 13 of the apparatus in schematic form, to which is coupled rechargeable battery 14. Power supply connections from the battery to the components of the control unit 13 are not illustrated, however, to aid clarity.

The control unit 13 comprises a processing means 15 with a memory 17 and a transceiver 19 coupled to said processing means 15. The display 5, user interface 9 and an audio unit 21 are also illustrated and are coupled to the processing means 15 of the control unit 13.

Processing means 15 is operable to act upon data input by a user via user interface 9, and also data received via said transceiver 19. In the case where a user inputs items from a shopping list, the processing means 15 is arranged to search a data table in said memory 17 in order to provide locations of each desired item. These locations are then displayed upon the display 5 alongside the corresponding item. In a preferable arrangement, a plan of the store is displayed upon display 5 with the locations of each item identified by an icon.

Additionally, audible commands may be presented to the user from the audio unit 21 in order to assist the user in locating desired items. Audio speakers for the audio unit 21 may be mounted within the handle of the trolley and a gain control for the audio unit may be provided as part of said user interface 9.

Transceiver 19 is arranged to receive data from a central server by means of a wireless communications link. For example, a central server located in said store sends data to the system located in the trolley handle, and said data is received via said transceiver 19. Such data may comprise advertisements, information relating to in-store special promotions, or may relate to emergency/evacuation notices. The data may even comprise notices to inform users of a missing child, etc.

The apparatus is also arranged to emit a signal from the transceiver 19 in order to allow the central server to monitor the location of the trolley. Thus, the central server can also send data relating to specific product offers to the apparatus when the trolley passes a particular point in the store, thereby highlighting the offer to the user. This aspect is also beneficial in that trolleys removed from the store can be easily located because their position is monitored by the central server. Therefore, abandoned trolleys can be easily located and recovered by the store staff.

The control unit 13 may additionally comprise a GPS device which enables accurate position monitoring of the trolley incorporating the apparatus of the present invention. In this preferable embodiment, a GPS tracking system is arranged to monitor the location of trolleys and notify a store control room if a trolley crosses a supermarket perimeter boundary. This aspect can also be coupled with a feature whereby, upon reception of the notification that a trolley is crossing the supermarket perimeter boundary, the control room transmits a data signal to said apparatus on the particular trolley which causes a visual and/or audible warning to be issued.

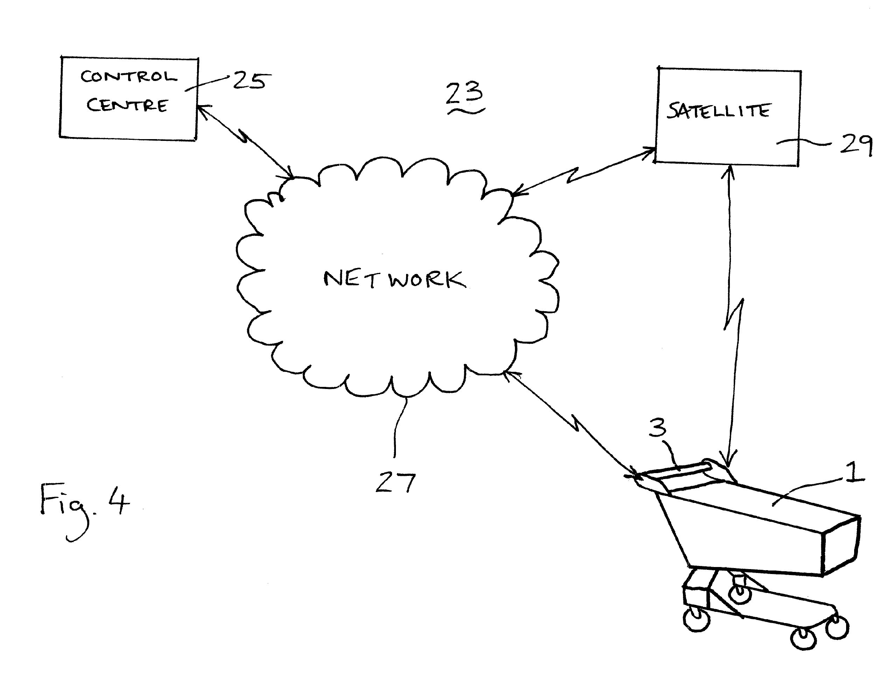

Such an embodiment is illustrated in Fig. 4, where a communication network 23 is illustrated which comprises a control centre 25, a network 27 (such as the Internet and/or a wireless communication network), a GPS satellite 29 and a trolley 1 provided with the apparatus of the present invention within a handle portion 3 thereof.

The GPS satellite 29 is arranged to monitor the position of the trolley 1 and is arranged to transmit data relating to the location of the trolley 1 to the control centre 25 (which may be located in the supermarket, or may be at a central location) via network 27. Should the trolley 1 pass the perimeter boundary of the supermarket, then control centre 25 is arranged to transmit a warning signal via network 27 to the apparatus, thereby activating a visible warning on the display, and/or activating an audible warning from the audio unit.

Additionally, each trolley may be given a unique identification number (ID no.) which is stored in the memory 17 of the apparatus, and this ID no. will allow a supermarket manager to maintain an inventory of overall trolley stock, and to identify, for example, which (and how many) trolleys are damaged.

In this arrangement, stock taking may be carried out by way of an operator provided with a hand-held scanner arranged to interrogate the apparatus of each individual trolley to enable the inventory to be updated.

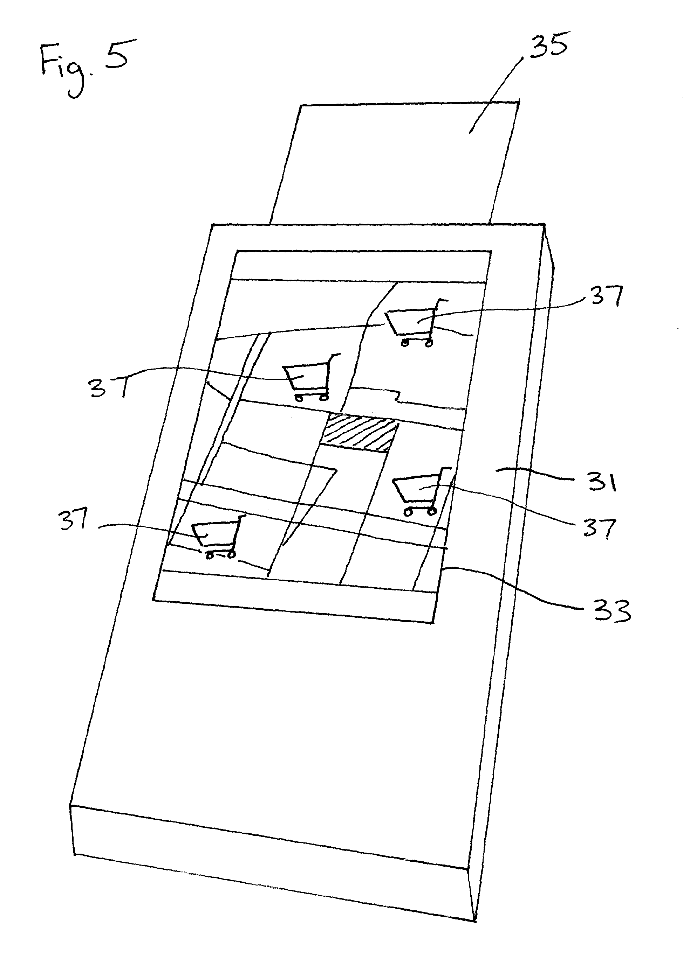

Fig. 5 illustrates a hand-held scanner 31 capable of carrying out the above function. The scanner 31 comprises a display means 33, a transceiver 35 and a control unit (not shown) which includes a memory (not shown). As an operator passed the scanner 31 over a collection of trolleys, the scanner emits an interrogation signal from said transceiver 35 to each individual trolley, and in turn, receives an identification signal (including the ID no.) from each individual trolley.

The data collected may be stored upon said scanner 31 for download to a central server at a later time, and/or the scanner 31 may be equipped to transmit the data wirelessly to the central server via the transceiver 35.

In addition to the above functions, the display 33 of the scanner 31 is arranged to display a map of the supermarket and its surrounding area. Where trolleys have been taken beyond the perimeter boundary of the supermarket, the communications network 23 of Fig. 4 allows data relating to the location of these abandoned trolleys to be transmitted to the scanner 31, which is then arranged to display the location of these abandoned trolleys upon the map shown by display 33. The trolley locations may be identified by means of trolley icons 37 projected onto said map.

In alternative arrangements of the above described embodiments, a dynamo may be provided as an alternative (or in addition) to the solar cell to provide power to the rechargeable battery. In this particular arrangement, the dynamo is located adjacent, and in contact with, a wheel of the trolley, thereby enabling the battery to be recharged whenever the trolley is in motion.

In another alternative arrangement, a vibrating mechanism may be provided within the handle portion of the trolley, either as an alternative to, or in addition to the audio unit, and may be arranged to vibrate to alert the user to information being displayed on the display, or to vibrate when the trolley crosses the supermarket perimeter boundary.

In a further alternative arrangement, a scanning device may be provided on the handle portion of the trolley in addition/as an alternative to the user interface, and is arranged to scan a user shopping list to enable the apparatus to display the items of the shopping list upon the display means. Suitable character recognition software would be required to implement such a function and would be stored upon the memory of said apparatus.

In addition to this function, the apparatus may be arranged to categorise a user input/scanned list such that, for example, frozen goods or fruit are moved to the end of the categorised list.

In yet a further alternative arrangement, the apparatus may comprise an application which enables it to enter a "stand-by" mode during periods of inactivity, thereby conserving power. The system can then re-start when, for example, a user places their hand on the trolley handle, or when the trolley starts to move.

The apparatus of the present invention may be provided within the handle of trolleys during the manufacture of said trolleys. Of course, the apparatus may also be provided in trolley handles which can then be "retrofitted" to existing trolleys.

As stated above, the apparatus of the present invention is not limited to use in shopping trolleys, but may also be incorporated in, for example, trolleys in bus/train stations and trolleys in airports.

## Claims

1. An information apparatus for a trolley, comprising: display means for displaying information to a user; control means; a power source; a user interface for allowing a user to input data; and a receiver for receiving data wirelessly over a communication network from a central server, wherein said information apparatus is arranged for location within a handle of said trolley.

2. An apparatus according to Claim 1, wherein said display means is arranged to display information based upon data received via said receiver from said central server.

3. An apparatus according to Claim 2, wherein said data received via said receiver from said central server is displayed on said display means when a trolley in which the apparatus is located is at particular locations in an environment where the trolley operates.

4. An apparatus according to any one or more of the preceding claims, wherein said user interface comprises a keypad allowing input of data by a user.

5. An apparatus according to any one or more of the preceding claims, wherein said power source comprises a rechargeable cell.

6. An apparatus according to Claim 5, further comprising a solar cell coupled to said rechargeable cell and arranged to recharge said rechargeable cell.

7. An apparatus according to Claim 6, wherein said solar cell is arranged for location within said handle of said trolley.

8. An apparatus according to any one or more of Claims 5 to 7, further comprising a dynamo coupled to said rechargeable cell and arranged to recharge said rechargeable cell.

9. An apparatus according to any one or more of the preceding claims, wherein said display means comprises an organic light emitting diode display.

10. An apparatus according to any one or more of the preceding claims, further comprising at least one speaker for communicating audio data to a user.

11. An apparatus according to Claim 10, wherein said user interface further comprises an audio gain means for allowing a user to alter an amplitude of audio data communicated by said at least one speaker.

12. An apparatus according to any one or more of the preceding claims, further comprising a vibrating means arranged to cause a handle of said trolley to vibrate.

13. An apparatus according to any one or more of the preceding claims, wherein said control means comprises a processing means and a memory.

14. An apparatus according to Claim 13, wherein said memory is arranged to store data relating to a particular trolley in which said apparatus is located.

15. An apparatus according to Claim 13 or Claim 14, wherein said memory is arranged to store data relating to an environment in which a trolley in which the apparatus is located operates.

16. An apparatus according to any one or more of the preceding claims, further comprising a transmitter for transmitting data wirelessly over a communication network to a central server.

17. An apparatus according to Claim 2, or any one or more of Claims 3 to 16 when directly or indirectly dependent on Claim 2, wherein said display means is arranged to display information based upon data received via said receiver from said central server in response to data input by a user via said user interface.

18. An apparatus according to any one or more of the preceding claims, wherein said user interface further comprises a scanning means operable to receive printed matter input by said user and to convert information contained on said printed matter to electronic data.

19. An apparatus according to Claim 18, wherein said electronic data is arranged for storage in said memory.

20. An apparatus according to any one or more of the preceding claims, wherein said apparatus is arranged to enter a standby mode during periods of inactivity, and to exit said standby mode when a user places their hands on a handle in which said apparatus is located and/or when a trolley in which the apparatus is located moves.

21. An apparatus according to any one or more of Claims 16 to 20, wherein said control means further comprises a GPS system operable to transmit location data to said central server to enable an operator to monitor the location of a particular trolley in which the apparatus is located.

22. An apparatus according to any one or more of Claim 12 to 22, wherein said apparatus is arranged to perform at least one of the following when a trolley in which the apparatus is located passes a boundary of an environment in which the trolley normally operates: (a) display a warning on said display means; (b) output an audible warning from said at least one speaker; and (c) cause a handle within which the apparatus is located to vibrate.

23. A handle for a trolley comprising an apparatus according to any one or more of the preceding claims.

24. A trolley comprising a handle according to Claim 23.

25. An information system, comprising: a trolley according to Claim 24; a control centre comprising a central server; and a wireless communications network.

26. A system according to Claim 25, wherein said wireless communications network includes a satellite link.

27. A scanning device comprising display means, a transceiver, and a control means, wherein said scanning device is operable in conjunction with the information system of Claims 25 and 26 in order to locate trolleys inside and/or outside a perimeter boundary of an environment in which the trolley normally operates, and to display the location of such trolleys on said display means.
